# EUROPÄISCHE PATENTSCHRIFT

(11) **EP 4 220 916 B1**
(45) Veröffentlichungstag und Bekanntmachung des Hinweises auf die Patenterteilung: **05.06.2024**
(21) Anmeldenummer: 23150551.2
(22) Anmeldetag: 06.01.2023
(51) Int. Cl.: H02K 11/33, H02K 5/08, H02K 5/22, H02K 3/50

(54) **BAUGRUPPE EINES ELEKTROGERÄTS MIT EINEM GEHÄUSETEIL, EINER LEITERPLATTE UND EINEM DECKEL**
ASSEMBLY OF AN ELECTRICAL APPLIANCE COMPRISING A CASING PART, A PRINTED CIRCUIT BOARD AND A COVER
ENSEMBLE D'UN APPAREIL ÉLECTRIQUE COMPRENANT UNE PIÈCE DE BOÎTIER, UNE CARTE DE CIRCUIT IMPRIMÉ ET UN COUVERCLE

(30) Priorität: 31.01.2022 DE 102022102133
(43) Veröffentlichungstag der Anmeldung: 02.08.2023
(73) Patentinhaber: HELLA GmbH & Co. KGaA, 59552 Lippstadt (DE)
(72) Erfinder: CARSTENS, Ralf, 59269 Beckum (DE); GROTHE, Benjamin, 58739 Wickede (DE); HILWERLING, Barbara, 59557 Lippstadt (DE); IVANUT, Ciprian, Ionel, 300776 Timisoara (RO); PRAEST, Christian, 33449 Langenberg (DE); WILLE-RIESS, Thorsten, 59469 Ense (DE); GÖSSMANN, Georg, 59519 Möhnesee (DE)
(74) Vertreter: Behr-Wenning, Gregor

(56) Entgegenhaltungen:
- DE-A1-102011 075 225
- DE-A1-102018 204 297
- JP-A- 2001 028 859
- JP-A- 2020 195 195
- JP-A- 2021 145 416
- US-A1- 2021 040 956

## Beschreibung

Die Erfindung betrifft eine Baugruppe für ein Elektrogerät,
- mit einem Gehäuseteil,
- mit einer Leiterplatte, die an einer Außenseite des Gehäuseteils angeordnet ist,
- mit einer elektrischen Schaltung, die auf der Leiterplatte angeordnet ist, und
- mit einem Deckel, der zusammen mit dem Gehäuseteil eine Elektronikkammer bildet, in dem die elektrische Schaltung angeordnet ist,
- wobei die Baugruppe Einpresskontakte aufweist, die einen Einpressabschnitt aufweisen, der in die Leiterplatte eingepresst und so an ihr befestigt und mit der Schaltung verbunden ist, und die einen Befestigungsabschnitt und einen Kontaktabschnitt aufweisen, über die die Schaltung von außen elektrisch kontaktiert werden kann,
- wobei die Einpresskontakte wenigstens einen ersten Einpresskontakt aufweisen, dessen Einpressabschnitt von einer ersten Seite in die Leiterplatte eingepresst ist, dessen Befestigungsabschnitt in einer Wand des Gehäuseteils befestigt ist und dessen Kontaktabschnitt in das Gehäuseteil hineinragt, und
- wobei die Einpresskontakte wenigstens einen zweiten Einpresskontakt aufweisen, dessen Einpressabschnitt von einer zweiten Seite in die Leiterplatte eingepresst ist, dessen Befestigungsabschnitt in dem Deckel befestigt ist und dessen Kontaktabschnitt aus dem Deckel herausragt.

Ein Elektrogerät mit einer solchen Baugruppe kann zum Beispiel eine Pumpe sein, wie sie zum Beispiel in den Dokumenten DE 10 2011 055 599 A1 und DE 10 2018 125 031 A1 bekannt sind. Diese Pumpen weisen einen elektrischen Motor als Antrieb auf, der einen Stator und einen Rotor hat. Die Pumpen weisen ferner ein mehrteiliges Gehäuse mit der Pumpenkammer, der Motorkammer und einer Elektronikkammer auf.

In der Pumpenkammer ist das Laufrad angeordnet, dass von dem Motor, der in der Motorkammer angeordnet ist, angetrieben wird. In der Elektronikkammer ist die elektrische Schaltung vorgesehen, mit welcher der Motor gesteuert und/oder geregelt werden kann. Das Laufrad und ein Rotor des Motors sind über die Welle miteinander verbunden. Die Welle ist durch eine Wand des Gehäuses geführt, durch welche die Pumpenkammer und die Motorkammer voneinander getrennt sind.

Der Stator ist in dem Gehäuseteil der Baugruppe angeordnet, der die Motorkammer einschließt, in der der Rotor angeordnet ist. Die Elektronikkammer, in der die als Steuerung des Motors vorgesehene Schaltung angeordnet ist, wird von dem Deckel der Baugruppe und dem Gehäuseteil der Baugruppe gebildet.

Bei einer Baugruppe einer solchen Pumpe können, wie eingangs beschrieben, erste Einpresskontakte vorgesehen sein, die die als Steuerung für den Motor vorgesehenen Schaltung und den Stator verbinden. Diese ersten Einpresskontakte sind dazu durch eine Wand des Gehäuseteils, in dem der Stator angeordnet ist, hindurchgeführt und befestigt. Bei einer Montage einer Leiterplatte, auf der die Schaltung angeordnet ist, werden Einpressabschnitte der ersten Einpresskontakte in dazu vorgesehene Löcher in der Leiterplatte hergestellt, wodurch eine mechanische Verbindung zwischen der Leiterplatte und dem Gehäuseteil und eine elektrische Verbindung zwischen der Schaltung und dem Motor hergestellt ist.

An dem Deckel sind die zweiten Einpresskontakte befestigt wobei Einpressabschnitte dieser zweiten Einpresskontakte aus dem Deckel herausragen. Wird nun der Deckel an dem Gehäuseteil montiert, werden die Einpressabschnitte der zweiten Einpresskontakte in dazu vorgesehene weitere Löcher eingeführt. Da die Elektronikkammer nach der Montage des Deckels eine geschlossene Kammer bildet, kann nach der Montage nicht ohne weiteres kontrolliert werden, ob die Einpressabschnitte der zweiten Einpresskontakte in die dazu vorgesehenen weiteren Löcher eingeführt wurden. Eine elektrische Funktionsprüfung der Pumpe bringt hier keine Erkenntnisse, da eine elektrische Verbindung zwischen der Schaltung und den zweiten Einpresskontakten hergestellt sein kann, ohne dass eine mechanische Verbindung hergestellt ist. Röntgen wäre ein Weg, um das festzustellen. Röntgen ist aber sehr aufwändig.

Hier setzt die vorliegende Erfindung an.

Der Erfindung liegt das Problem einer einfachen Überprüfung der Verbindung, insbesondere der mechanischen Verbindung zwischen den zweiten Einpresskontakten und der Leiterplatte, zu Grunde.

Dieses Problem kann mittels der Erfindung auf folgende Weise gelöst werden:
Ein Bereich der Leiterplatte, aus dem die Enden des Einpressabschnitts des wenigstens einen zweiten Einpresskontakts herausragen, und das Gehäuseteil begrenzen einen Raum, der nicht mit der Elektronikkammer verbunden ist und in den ein aus der Leiterplatte auf deren ersten Seite herausragendes Ende des Einpressabschnitts des wenigstens einen zweiten Einpresskontakts hineinragt. Dieser Raum hat eine Öffnung nach außen, die für eine Überprüfung der Verbindung zwischen dem zweiten Einpresskontakt und der Leiterplatte genutzt werden kann. Die Öffnung kann für eine visuelle Überprüfung auch mittels einer Kamera genutzt werden. Zwischen diesem Raum und der Elektronikkammer kann eine Verbindung bestehen. Wenn das so ist, kann Schmutz oder Feuchtigkeit durch die Öffnung in die Elektronikkammer gelangen. Es ist möglich, dass die Öffnung mit einem Stopfen, einem anderen Bauteil, z.B. einem weiteren Deckel o.a. oder einer an dem Gehäuseteil oder dem Deckel vorgesehenen Dichtungsmöglichkeit verschlossen oder mit einer Vergussmasse oder ähnlichem ausgefüllt ist, so dass auch die zweiten Einpresskontakte vor Umwelteinflüssen geschützt sind. Es ist auch möglich, dass keine Verbindung zwischen dem Raum und der Elektronikkammer besteht.

Gemäß der Erfindung kann die Öffnung zumindest vor dem Verschließen derselben einen Blick auf das aus der Leiterplatte auf deren ersten Seite herausragende Ende des Einpressabschnitts des wenigstens einen zweiten Einpresskontakts freigeben. Das bedeutet, dass eine Sichtlinie zwischen der Öffnung und dem Einpressabschnitt des wenigstens einen zweiten Einpresskontakts besteht, wodurch eine direkte Sicht auf den Einpresskontakt möglich ist.

Bei einer Variante der Erfindung kann der Raum auch von einem Teil des Deckels begrenzt sein.

Das Gehäuseteil und/oder der Deckel können in dem Bereich des Raums eine Ausnehmung aufweisen. Diese Ausnehmung bzw. diese Ausnehmungen können einen Teil der Öffnung oder die Öffnung oder einen Teil des Raums oder den Raum bilden.

Bei einer Variante der erfindungsgemäßen Baugruppe kann der wenigstens eine zweite Einpresskontakt einen Steckverbinderabschnitt aufweisen, der einen Kontakt eines Steckverbinderteils ist. Dieses Steckverbinderteil kann mit einem komplementären Steckverbinderteil verbunden werden, um eine Steckverbindung herzustellen, über die das elektrische Gerät, von dem die Baugruppe ein Teil sein kann, an eine Stromversorgung oder eine übergeordnete Steuerung, einen Datenbus oder ähnliches angeschlossen sein kann.

Bei einem erfindungsgemäßen elektrischen Gerät, das einen elektrischen Antrieb und eine erfindungsgemäße Baugruppe aufweist, nimmt das Gehäuseteil der Baugruppe einen Stator des Antriebs des Geräts auf. Ein solches erfindungsgemäßes Gerät kann eine Pumpe, insbesondere eine Pumpe für ein Kraftfahrzeug sein. Das Gehäuseteil kann eine Motorkammer bilden, in welcher ein Rotor des Motors drehbar gelagert ist. Ein weiteres Gehäuseteil kann mit dem Gehäuseteil verbunden sein. Dieses weitere Gehäuseteil kann eine Pumpenkammer bilden, in dem ein Laufrad der Pumpe drehbar gelagert ist. Das Pumpenrad und der Rotor sind miteinander verbunden, so dass die Drehung des Rotors auf das Pumpenrad übertragen werden kann.

Anhand der beigefügten Zeichnungen wird die Erfindung nachfolgend näher erläutert. Dabei zeigt:

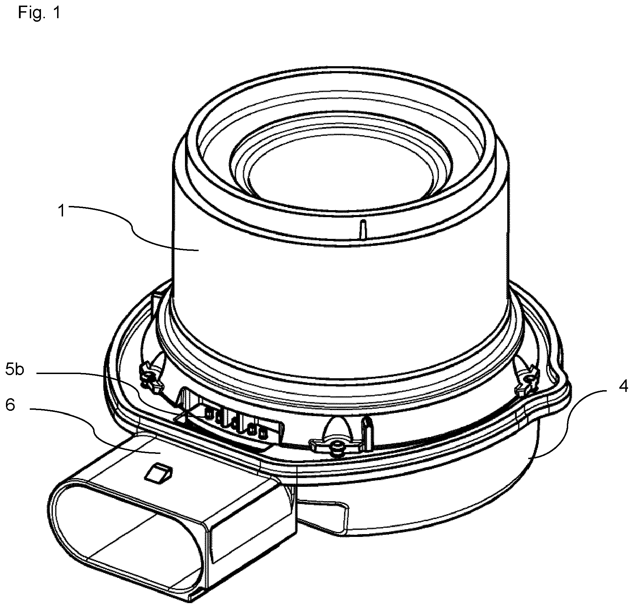

- Fig. 1: eine perspektivische Darstellung einer erfindungsgemäßen Baugruppe und

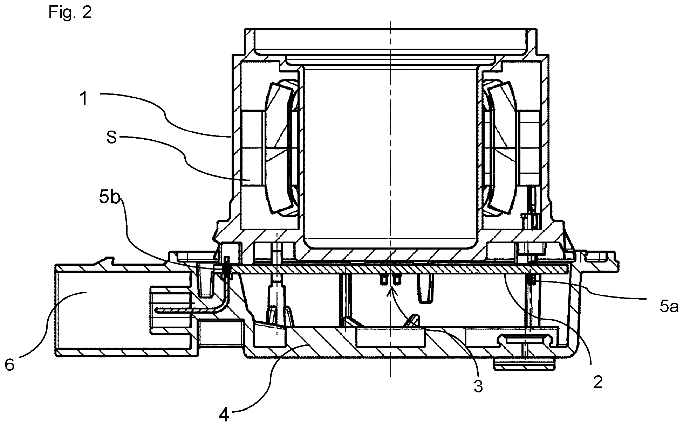

- Fig. 2: eine Schnittdarstellung der erfindungsgemäßen Baugruppe.

Die erfindungsgemäße Baugruppe weist ein Gehäuseteil 1, eine Leiterplatte 2, eine auf der Leiterplatte 2 angeordnete Schaltung 3, einen Deckel 4, Einpresskontakte 5a, 5b auf und ein Steckverbinderteil 6 auf. Das Gehäuseteil 1, der Deckel 4 und das Steckverbinderteil 6 können Kunststoffspritzgussteile sein. Das Steckverbinderteil 6 kann einstückig mit dem Deckel 4 verbunden sein.

Das Gehäuseteil 1 ist topfartig ausgebildet und der Innenraum des topfartigen Gehäuseteils 1 bildet eine Motorkammer, in der ein Rotor eines Elektromotors angeordnet ist. In einer rohrartigen Wand des Gehäuseteils 1 ist ein ringförmiger Hohlraum vorgesehen, in der ein Stator S eines Motors angeordnet ist.

Eine stirnseitige Wand des Gehäuseteils 1 und der Deckel 4 bilden eine Elektronikkammer der Baugruppe, in der die Leiterplatte 2 zum überwiegenden Teil und die Schaltung 3 vollständig angeordnet sind.

Die Schaltung 3 ist mit dem Stator S verbunden. Dazu sind erste Einpresskontakte 5a der Einpresskontakte 5a, 5b in der stirnseitigen Wand des Gehäuseteils 1 angeordnet. Diese ersten Einpresskontakte 5a weisen einen Einpressabschnitt auf, die in die Leiterplatte 2 eingepresst und so an ihr befestigt und mit der Schaltung 3 elektrisch verbunden ist, einen Befestigungsabschnitt, der in der stirnseitigen Wand eingebettet ist, wodurch die ersten Einpresskontakte mit dem Gehäuseteil 1 fest verbunden sind, und die einen Kontaktabschnitt aufweisen, über den die ersten Einpresskontakte 5a und damit die Schaltung 3 elektrisch mit dem Stator S verbunden ist.

Die Schaltung 3 ist auch mit einem Steckverbinder verbunden, der das Steckverbinderteil 6 aufweist. Dazu sind zweite Einpresskontakte 5b der Einpresskontakte 5a, 5b in dem Steckverbinderteil 6 und dem Deckel 4 angeordnet. Diese zweiten Einpresskontakte 5b weisen einen Einpressabschnitt auf, der in die Leiterplatte 2 eingepresst und so an ihr befestigt und mit der Schaltung 3 elektrisch verbunden ist, einen Befestigungsabschnitt, der in dem Deckel 4 bzw. dem Steckverbinderteil 6 eingebettet ist, wodurch die ersten Einpresskontakte mit dem Deckel 4 bzw. dem Steckverbinderteil 6 1 fest verbunden sind, und die einen Kontaktabschnitt aufweisen, der in das Steckverbinderteil 6 hineinragt und zusammen mit dem Steckverbinderteil 6 einen Gerätestecker bildet.

Die Einpresskontakte 5a, 5b sind von verschiedenen Seiten in die Leiterplatte 2 einpresst. Die ersten Einpresskontakte 5a von einer ersten Seite der Leiterplatte 2 und die zweiten Einpresskontakte 5b von einer zweiten Seite der Leiterplatte 2, auf der auch Bauelemente der Schaltung 3 angeordnet sind. Bauelemente der Schaltung können aber auch auf der ersten Seite angeordnet sein.

Die Montage der Baugruppe erfolgt in der Weise, dass die Leiterplatte 2, auf der bereits die Schaltung 3 vorgesehen ist, auf dem Gehäuseteil 1 montiert wird. Dazu werden die Einpressabschnitte der ersten Einpresskontakte 5a in dazu vorgesehene Löcher der Leiterplatte 2 eingeführt und eingepresst. Durch eine Sichtkontrolle kann dann geprüft werden, ob die Einpressabschnitte der ersten Einpresskontakte 5a sauber in den Löchern der Leiterplatte 2 eingeführt sind und fest in diesen Löchern sitzen. Dann wird der Deckel 4 und das Steckerteil 6 auf die Leiterplatte 2 aufgesetzt und Einpressabschnitte der zweiten Einpresskontakte 5b in dazu vorgesehene Löcher in der Leiterplatte 2 einführt und eingepresst. Damit auch dann mittels einer Sichtkontrolle geprüft werden kann, ob die zweiten Einpresskontakte wie gewünscht in die Löcher eingeführt und dort fest eingepresst sind, sind die Löcher der Leiterplatte 2, in die die Einpressabschnitte der zweiten Einpresskontakte 5b eingepresst sind, in einem Bereich der Leiterplatte 2 angeordnet, der nicht in der Elektronikkammer der Baugruppe angeordnet ist. Die Enden der Einpressabschnitte der zweiten Einpresskontakte 5b, die auf der ersten Seite der Leiterplatte aus dieser herausragen, sind in einer Ausnehmung in dem Gehäuseteil 1 angeordnet, die nach außen offen ist. Dadurch ist es möglich nach dem Einpressen der zweiten Einpresskontakte in die dazu vorgesehenen Löcher der Leiterplatte mittels einer Sichtkontrolle zu prüfen, ob die Montage fehlerhaft war oder nicht. Nach einer solchen Kontrolle kann die Ausnehmung verschlossen werden. Dazu kann ein weiteres Bauteil oder eine Vergussmasse genutzt werden, mit der die Ausnehmung ausgefüllt wird. Ebenso kann die Ausnehmung mit einem anderen Mittel verschlossen werden, wenn das sinnvoll oder notwendig ist.

### Bezugszeichenliste

- 1: Gehäuseteil
- 2: Leiterplatte
- 3: Schaltung
- 4: Deckel
- 5a: erste Einpresskontakte
- 5b: zweite Einpresskontakte
- 6: Steckverbinderteil

## Patentansprüche

1. Baugruppe für ein Elektrogerät
• mit einem Gehäuseteil (1),
• mit einer Leiterplatte (2), die an einer Außenseite des Gehäuseteils (1) angeordnet ist,
• mit einer elektrischen Schaltung (3), die auf der Leiterplatte (2) angeordnet ist, und
• mit einem Deckel, der zusammen mit dem Gehäuseteil (1) eine Elektronikkammer bildet, in dem die elektrische Schaltung (3) angeordnet ist,
• wobei die Baugruppe Einpresskontakte (5a, 5b) aufweist, die einen Einpressabschnitt aufweisen, der in die Leiterplatte (2) eingepresst und so an ihr befestigt und mit der Schaltung (3) verbunden ist, und die einen Befestigungsabschnitt und einen Kontaktabschnitt aufweisen, über die die Schaltung (3) von außen elektrisch kontaktiert werden kann,
• wobei die Einpresskontakte (5a, 5b) wenigstens einen ersten Einpresskontakt (5a) aufweisen, dessen Einpressabschnitt von einer ersten Seite in die Leiterplatte (2) eingepresst ist, dessen Befestigungsabschnitt in einer Wand des Gehäuseteils (1) befestigt ist und dessen Kontaktabschnitt in das Gehäuseteil (1) hineinragt, und
• wobei die Einpresskontakte (5a, 5b) wenigstens einen zweiten Einpresskontakt (5b) aufweisen, dessen Einpressabschnitt von einer zweiten Seite in die Leiterplatte (2) eingepresst ist, dessen Befestigungsabschnitt in dem Deckel (4) befestigt ist und dessen Kontaktabschnitt aus dem Deckel (4) herausragt,
**dadurch gekennzeichnet,**
**dass** ein Bereich der Leiterplatte (2), aus dem die Enden des Einpressabschnitts des wenigstens einen zweiten Einpresskontakts (5b) herausragen, und das Gehäuseteil (1) einen Raum begrenzen, in dem ein aus der Leiterplatte (2) auf deren ersten Seite herausragendes Ende des Einpressabschnitts des wenigstens einen zweiten Einpresskontakts (5b) hineinragt, wobei der Raum eine Öffnung nach außen hat.

2. Baugruppe nach Anspruch 1, **dadurch gekennzeichnet, dass** die Öffnung einen Blick auf das aus der Leiterplatte (2) auf deren ersten Seite herausragenden Ende des Einpressabschnitts des wenigstens einen zweiten Einpresskontakts (5b) freigibt.

3. Baugruppe nach Anspruch 1 oder 2, **dadurch gekennzeichnet, dass** der Raum auch von einem Teil des Deckels (4) begrenzt wird.

4. Baugruppe nach einem der Ansprüche 1 bis 3, **dadurch gekennzeichnet, dass** das Gehäuseteil (1) und/oder der Deckel (4) in dem Bereich des Raums eine Ausnehmung bildet.

5. Baugruppe nach einem der Ansprüche 1 bis 4, **dadurch gekennzeichnet, dass** der wenigstens eine zweite Einpresskontakt (5b) einen Steckverbinderabschnitt aufweist, der einen Kontakt eines Steckverbinderteils (6) ist.

6. Elektrisches Gerät mit einem elektrischen Antrieb und mit einer Baugruppe nach einem der Ansprüche 1 bis 5, **dadurch gekennzeichnet, dass** der Gehäuseteil (1) einen Stator des Antriebs des Geräts aufnimmt.

7. Gerät nach Anspruch 6, **dadurch gekennzeichnet, dass** das Gerät eine Pumpe, insbesondere für ein Kraftfahrzeug ist.

## Claims

1. Assembly of an electrical appliance comprising
• a casing part (1),
• a printed circuit board (2) that is arranged on an outside of the casing part (1),
• an electrical circuit (3) that is arranged on the printed circuit board (2), and
• a cover that, together with the casing part (1) forms an electronics chamber in which the electrical circuit (3) is arranged,
• wherein the assembly features press-in contacts (5a, 5b) having a press-in section which is pressed into the printed circuit board (2) and thus fixed thereto and connected to the circuit (3), and having a fastening section and a contact section, by means of which the circuit (3) can be electrically contacted from the outside,
• wherein the press-in contacts (5a, 5b) feature at least one first press-in contact (5a) the press-in section of which is pressed into the printed circuit board (2) from a first side, the fastening section of which is fastened in a wall of the casing part (1) and the contact section of which extends into the casing part (1), and
• wherein the press-in contacts (5a, 5b) feature at least one second press-in contact (5b) the press-in section of which is pressed into the printed circuit board (2) from a second side, the fastening section of which is fastened in the cover (4) and the contact section of which protrudes out of the cover (4),
**characterized in that**
one area of the printed circuit board (2) from which the ends of the press-in section of the at least one second press-in contact (5b) protrude, and the casing part (1) delimit a space into which an end of the press-in section of the at least one second press-in contact (5b), protruding from the printed circuit board (2) on its first side, extends, wherein the space has an opening to the outside.

2. Assembly in accordance with claim 1, **characterized in that** the opening allows a view of the end of the press-in section of the at least one second press-in contact (5b) protruding from the printed circuit board (2) on its first side.

3. Assembly in accordance with claim 1 or 2, **characterized in that** the space is also delimited by a part of the cover (4).

4. Assembly in accordance with one of claims 1 through 3, **characterized in that** the casing part (1) and/or the cover (4) forms a recess in the area of the space.

5. Assembly in accordance with one of claims 1 through 4, **characterized in that** the at least one second press-in contact (5b) features a plug connector section that is a contact of a plug connector part (6).

6. Electrical appliance with an electric drive and with an assembly in accordance with one of claims 1 through 5, **characterized in that** the casing part (1) accommodates a stator of the drive of the appliance.

7. Appliance in accordance with claim 6, **characterized in that** the appliance is a pump, in particular for a motor vehicle.

## Revendications

1. Ensemble d'un appareil électrique
• comprenant une pièce de boîtier (1),
• une carte de circuit imprimé (2), disposée sur une face extérieure de la pièce de boîtier (1),
• un branchement électrique (3), disposé sur la carte de circuit imprimé (2), et
• un couvercle qui forme, avec la pièce de boîtier (1), une chambre électronique dans laquelle se trouve le branchement électrique (3),
• l'ensemble présentant des contacts à sertir (5a, 5b) qui comprennent une section d'insertion qui est insérée dans la carte de circuit imprimé (2) à laquelle elle est ainsi fixée et reliée au branchement (3), ainsi qu'une section de fixation et une section de contact par l'intermédiaire desquelles le branchement (3) peut être mis en contact électriquement depuis l'extérieur,
• les contacts à sertir (5a, 5b) présentant au moins un premier contact à sertir (5a) dont la section d'insertion est insérée depuis un premier côté dans la carte de circuit imprimé (2), dont la section de fixation est fixée dans une paroi de la pièce de boîtier (1) et dont la section de contact pénètre dans la pièce de boîtier (1), et
• les contacts à sertir (5a, 5b) présentant au moins un deuxième contact à sertir (5b) dont la section d'insertion est insérée depuis un deuxième côté dans la carte de circuit imprimé (2), dont la section de fixation est fixée dans le couvercle (4) et dont la section de contact dépasse du couvercle (4),
**caractérisé en ce que**
une zone de la carte de circuit imprimé (2), dont saillissent les extrémités de la section d'insertion d'au moins un deuxième contact à sertir (5b), et la pièce de boîtier (1) délimitent un espace dans lequel entre une extrémité de la section d'insertion d'au moins un deuxième contact à sertir (5b) saillissant de la carte de circuit imprimé (2) sur son premier côté, l'espace ayant une ouverture vers l'extérieur.

2. Ensemble selon la revendication 1, **caractérisé en ce que** l'ouverture permet de voir l'extrémité de la section d'insertion d'au moins un deuxième contact à sertir (5b) saillissant de la carte de circuit imprimé (2) sur son premier côté.

3. Ensemble selon la revendication 1 ou 2, **caractérisé en ce que** l'espace est également délimité par une partie du couvercle (4).

4. Ensemble selon l'une des revendications 1 à 3, **caractérisé en ce que** la pièce de boîtier (1) et/ou le couvercle (4) forme un évidement dans la zone de l'espace.

5. Ensemble selon l'une des revendications 1 à 4, **caractérisé en ce qu'**au moins le deuxième contact à sertir (5b) comprend une section de connecteur qui est un contact d'une pièce de connecteur (6).

6. Ensemble d'un appareil électrique comportant un entraînement électrique et un ensemble selon l'une des revendications 1 à 5, **caractérisé en ce que** la pièce de boîtier (1) reçoit un stator de l'entraînement de l'appareil.

7. Appareil selon la revendication 6, **caractérisé en ce que** l'appareil est une pompe, notamment pour un véhicule automobile.
